# FASCICULE DE BREVET EUROPEEN

(11) **EP 0 457 702 B1**
(45) Date de publication et mention de la délivrance du brevet: **01.03.1995**
(21) Numéro de dépôt: 91440038.7
(22) Date de dépôt: 14.05.1991
(51) Int. Cl.: B23B 29/034, B23Q 11/00, B23B 3/36

(54) **Tête à aléser**
Ausbohrkopf
Boring head

(30) Priorité: 15.05.1990 FR 9006218
(43) Date de publication de la demande: 21.11.1991
(73) Titulaire: E.P.B. EMILE PFALZGRAF, S.A., 67330 Bouxwiller (FR)
(72) Inventeur: Pfalzgraf, Emile, F-67330 Bouxwiller (FR); Jaeger, Claude, F-67700 Monswiller (FR); Tugend, Raymond, F-67350 Uberach (FR)
(74) Mandataire: Nuss, Pierre

(56) Documents cités:
- EP-A- 0 044 825
- CH-A- 656 566
- DE-A- 2 158 717
- DE-U- 8 526 482
- FR-A- 2 561 555

## Description

La présente invention concerne le domaine des accessoires de machines-outils, à commande numérique, centres d'usinage, cellules et ateliers flexibles et a pour objet une tête à aléser pour la réalisation de trous précis présentant des caractéristiques géométriques très rigoureuses, au moyen d'une gamme d'outil à aléser interchangeable.

On connaît actuellement des dispositifs permettant d'ajuster le diamètre choisi, mais dans lesquels apparaît obligatoirement un déséquilibre de masse qui conduit à un balourd lors de l'opération d'alésage, ce balourd étant d'autant plus sensible que les vitesses de rotation augmentent. Or, les machines modernes et les nouveaux matériaux utilisés permettent généralement des vitesses de coupe élevées.

Pour ce type de porte-outils la précision est donc très importante lors du réglage et il est également indispensable d'éviter toute dispersion lors du blocage final.

Pour obvier à cet inconvénient il a été proposé, suivant FR-A-2 561 555, un dispositif d'équilibrage pour le perçage se présentant sous forme de deux masselottes reliées entre elles à leurs extrémités par des liens souples et montées sur le porte-outils de perçage, ces masselottes étant déplaçables en rotation au moyen d'un manchon de recouvrement et de manoeuvre unique pouvant être bloqué en position réglée au moyen d'une vis-pointeau.

Ce dispositif permet certes de corriger le balourd occasionné par le déport de l'outil, mais n'offre pas une précision suffisante pour éliminer le balourd, en particulier lorsque l'outil doit tourner à des vitesses très élevées, les deux masselottes liées entre elles par des liens souples pouvant difficilement être réglées avec la précision suffisante. En outre, ce dispositif est également exposé à un problème d'usure, en particulier des liens unissant les masselottes, de sorte que lesdits liens risquent de se détendre et que la précision du réglage en est affectée.

Enfin, dans le document précité, le positionnement de l'outil est uniquement assuré par un alésage de réception prévu dans un coulisseau déplaçable et réglable radialement et son blocage est simplement effectué par une vis de pression, de sorte qu'une dispersion lors du blocage final est inévitable.

On connaît également, par CH-A-656 566 sur lequel est basé le préambule de la revendication 1, un porte-outil en deux pièces, dont la queue peut se positionner dans deux positions différentes sur une embase parallèle au piston ou à l'alésage, de sorte que ledit porte-outil présente une plage de réglage plus importante et non limitée uniquement au déplacement du piston dans son alésage, au moyen de la vis micrométrique.

Toutefois, ce dispositif est soumis à des vibrations importantes, en particulier dans le cas où l'outil est désaxé d'une manière importante et est, de ce fait, tributaire de la vitesse de rotation de la broche. Le balourd important, dès qu'une certaine vitesse est atteinte, ne peut être supprimé qu'avec une vitesse de rotation faible de la broche.

La présente invention a pour but de pallier ces inconvénients.

Elle a, en effet, pour objet une tête à aléser constituée par un corps muni d'un piston radial de réception d'un outil d'alésage serré au moyen d'une vis, ledit piston étant réglable en position au moyen d'une vis micrométrique, le corps étant pourvu, en outre, d'un coulisseau réalisant le guidage et l'orientation du piston, caractérisée en ce que le coulisseau réalise, en outre, une butée de fin de course pour le piston de réception de l'outil d'alésage et en ce que le corps est pourvu, en outre, d'un dispositif d'équilibrage à masselottes indépendantes, le coulisseau, qui réalise le guidage, coopérant avec un méplat transversal du piston et étant actionné sur sa face opposée à celle en contact avec le piston par une vis d'ajustement du jeu de fonctionnement entre le coulisseau et le piston, ladite vis étant bloquée en position par un ensemble de pression.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale et en coupe d'une tête à aléser conforme à l'invention ;
la figure 2 est une vue suivant F et partiellement en coupe suivant A-A de la figure 1 ;
la figure 3 est une vue en coupe suivant B-B de la figure 1 ;
la figure 4 est une vue partielle en plan représentant les verniers de réglage de l'équilibrage, et
la figure 5 est une vue partielle en coupe représentant le montage d'un outil d'alésage muni d'un épaulement.

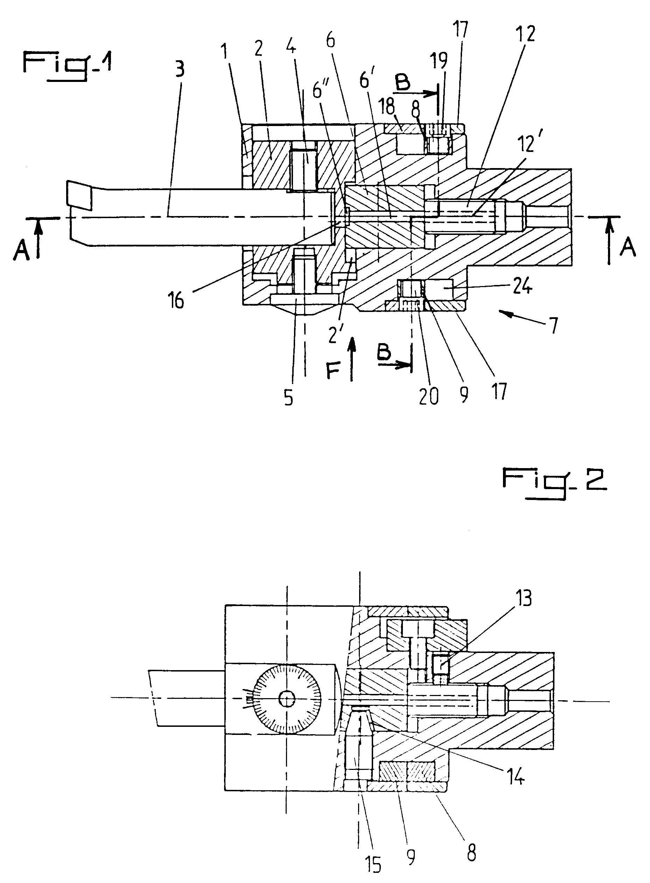

Les figures 1 à 3 des dessins annexés, représentent une tête à aléser, constituée par un corps 1 muni d'un piston radial 2 de réception d'un outil d'alésage 3 pouvant être serré au moyen d'une vis 4, ledit piston 2 étant réglable en position au moyen d'une vis micrométrique 5, le corps 1 étant pourvu, en outre, d'un coulisseau 6 réalisant le guidage, l'orientation et une butée de fin de course pour le piston 2 de réception de l'outil d'alésage 3 et d'un dispositif 7 d'équilibrage à masselottes indépendantes 8 et 9.

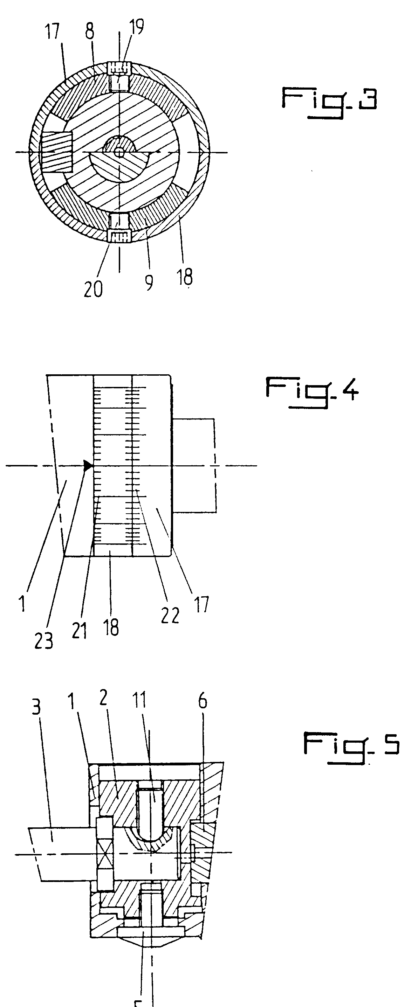

Dans le cas d'utilisation d'un outil d'alésage 3 muni d'un épaulement (figure 5) permettant l'appui sur le piston 2, ledit outil 3 est serré dans ledit piston 2 au moyen d'une vis à bout sphérique 11.

Le coulisseau 6, qui réalise le guidage, l'orientation et une butée de fin de course pour le piston 2, coopère avec un méplat transversal 2' du piston 2 et est actionné sur sa face opposée à celle en contact avec le piston 2 par une vis 12 d'ajustement du jeu de fonctionnement entre le coulisseau 6 et le piston 2, ladite vis 12 étant bloquée en position par un ensemble de pression 13.

Le coulisseau 6 est, en outre, pourvu d'un perçage tronconique 14 destiné à coopérer avec une vis-pointeau 15 pour le blocage en position du piston 2. Ainsi, après application du coulisseau 6 contre le piston 2 au moyen de la vis d'ajustement 12 et blocage en position de cette dernière par l'ensemble de pression 13, le coulisseau 6 peut être serré contre le piston 2 au moyen de la vis-pointeau 5 et sa position, ainsi que celle de l'outil 3 dont il est muni, peut être verrouillée en évitant toute dispersion.

Enfin, la vis d'ajustement 12 et le coulisseau 6 sont pourvus d'un perçage central respectivement 12' et 6', le perçage 6' du coulisseau 6 débouchant sur le côté tourné vers le piston 2 dans un lamage 6'' qui coopère avec un trou 16 du piston 2 débouchant dans le logement de réception de l'outil 3. Ainsi, il est possible de réaliser un acheminement du fluide de coupe par le centre de la tête à aléser jusqu'à la plaquette de l'outil 3.

Le dispositif d'équilibrage 7 à masselottes indépendantes 8 et 9 est constitué, en outre, par des bagues 17 et 18 solidaires respectivement des masselottes 8 et 9 par l'intermédiaire de vis 19 et 20 réalisant simultanément le blocage en position desdites bagues 17, 18 et masselottes 8,9, après réglage, les masselottes 8 et 9 étant, de préférence, sous forme de quartiers annulaires de section rectangulaire guidés dans une gorge 24 du corps 1.

Ainsi, la position des masselottes 8 et 9 peut être réglée individuellement au moyen des bagues correspondantes 17 et 18, de sorte que le réglage de l'équilibrage peut être réalisé de manière optimale.

Les bagues 17 et 18 sont avantageusement pourvues de graduations 21 et 22 destinées à coopérer avec un repère fixe 23 prévu sur le corps 1.

Les graduations 21 et 22 permettent, en coopération avec le repère 23, de régler chaque bague 17 et 18 avec sa masselotte 8 et 9 correspondante en fonction de valeurs propres à un outil d'alésage et à sa position diamétrale, ces valeurs pouvant être lues sur des tables prévues à cet effet.

Grâce à l'invention, il est possible de réaliser une tête à aléser dont le réglage de l'outil peut être réalisé de manière particulièrement précise et dont le balourd engendré par la rotation dudit outil en position excentrée est compensé par un dispositif d'équilibrage à masselottes indépendantes.

Bien entendu, l'invention n'est pas limitée au mode de réalisation décrit et représenté aux dessins annexés.

## Revendications

1. Tête à aléser constituée par un corps (1) muni d'un piston radial (2) de réception d'un outil d'alésage (3) serré au moyen d'une vis (4), ledit piston (2) étant réglable en position au moyen d'une vis micrométrique (5), le corps (1) étant pourvu, en outre, d'un coulisseau (6) réalisant le guidage et l'orientation du piston (2), caractérisée en ce que le coulisseau (6) réalise, en outre, une butée de fin de course pour le piston (2) de réception de l'outil d'alésage (3) et en ce que le corps est pourvu, en outre d'un dispositif (7) d'équilibrage à masselottes indépendantes (8 et 9), le coulisseau (6), qui réalise le guidage, coopérant avec un méplat transversal (2') du piston (2) et étant actionné sur sa face opposée à celle en contact avec le piston (2) par une vis (12) d'ajustement du jeu de fonctionnement entre le coulisseau (6) et le piston (2), ladite vis (12) étant bloquée en position par un ensemble de pression (13).

2. Tête à aléser, suivant la revendication 1, caractérisée en ce que le coulisseau (6) est, en outre, pourvu d'un perçage tronconique (14) destiné à coopérer avec une vis-pointeau (15) pour le blocage en position du piston (2).

3. Tête à aléser, suivant la revendication 1, caractérisée en ce que la vis d'ajustement (12) et le coulisseau (6) sont pourvus d'un perçage central respectivement (12' et 6'), le perçage (6') du coulisseau (6) débouchant sur le côté tourné vers le piston (2) dans un lamage (6'') qui coopère avec un trou (16) du piston (2) débouchant dans le logement de réception de l'outil (3).

4. Tête à aléser, suivant la revendication 1, caractérisée en ce que le dispositif d'équilibrage (7) à masselottes indépendantes (8 et 9) est constitué, en outre, par des bagues (17 et 18) solidaires respectivement des masselottes (8 et 9) par l'intermédiaire de vis (19 et 20) réalisant simultanément le blocage en position desdites bagues (17, 18) et masselottes (8, 9), après réglage, les masselottes (8 et 9) étant, de préférence, sous forme de quartiers annulaires de section rectangulaire guidés dans une gorge (24) du corps (1).

5. Tête à aléser, suivant la revendication 4, caractérisée en ce que les bagues (17 et 18) sont avantageusement pourvues de graduations (21 et 22) destinées à coopérer avec un repère fixe (23) prévu sur le corps (1).

## Claims

1. Boring head consisting of a body (1) equipped with a radial piston (2) for receiving a boring tool (3) gripped by means of a screw (4), said piston (2) being adjustable in position by means of a micrometer screw (5), whereby the body (1) is also provided with a slider (6) producing the guidance and the orientation for the piston (2), characterized in that the slider (6) produces also an end-of-travel stop for the piston (2) receiving the boring tool (3) and in that the body (1) is also provided with a balancing device (7) with independent feeders (8 ans 9), wereby the slider (6), which produces the guidance, cooperates with a transverse flat surface (2') of the piston (2) and is actuated on its face remote from that in contact with the piston (2) by a screw (12) for adjusting the operating play between the slider (6) and the piston (2), said screw (12) being locked in position by a pressure unit (13).

2. Boring head according to claim 1, characterized in that the slider (6) is also provided with a truncated cone-shaped perforation (14) intended to cooperate with a binding screw (15) to lock the piston (2) in position.

3. Boring head according to claim 1, characterised in that the adjusting screw (12) and the slider (6) are respectively provided with a central perforation (12' and 6'), the perforation (6') of the slider (6) opening at the side turned toward the piston (2) in a spot face (6'') which cooperates with a hole (16) in the piston (2) opening in the housing for receiving the tool (3).

4. Boring head according to claim 1, characterised in that the balancing device (7) with independent feeders (8 and 9) also consists of rings (17 and 18) respectively connected to feeders (8 and 9) by means of screws (19 and 20) which simultaneously lock said rings (17, 18) and feeders (8, 9) in position, after adjustment, the feeders (8 and 9) preferably being in the form of annular quarters of rectangular cross section guided in a groove (24) in the body (1).

5. Boring head according to claim 4, characterised in that the rings (17 and 18) are advantageously provided with graduations (21 and 22) intended to cooperate with a fixed mark (23) provided on the body (1).

## Patentansprüche

1. Bohrkopf, bestehend aus einem Körper (1), welcher mit einem das über eine Spannschraube (4) festgespannte Bohrwerkzeug (3) aufnehmenden Radialkolben (2) versehen ist, wobei der Kolben (2) über eine Mikrometerschraube (5) in seiner Lage einstellbar ist, wobei der Körper (1) außerdem mit einem Gleitstück (6) versehen ist, welches zur Führung und Ausrichtung des Kolbens (2) dient, dadurch gekennzeichnet, daß das Gleitstück außerdem als Endanschlag für den das Bohrwerkzeug (3) aufnehmenden Kolben (2) dient, and daß der Körper (1) außerdem mit einer Ausgleichsvorrichtung (7) mit voneinander unabhängigen Ausgleichsgewichten (8 und 9) verschen ist, wobei das zur Führung dienende Gleitstück (6) mit einer quergerichteten Abflachung (2') am Kolben (2) zusammenwirkt und auf seiner der am Kolben (2) anliegenden Seite gegenüberliegenden Seite durch eine Stellschraube (12) zur Einstellung des Betriebsspieles zwischen dem Gleitstück (6) und dem Kolben (2) betätigt wird, wobei die Schraube (12) durch eine Druckeinheit (13) blockiert wird.

2. Bohrkopf nach Ansprüch 1 dadurch gekennzeichnet, daß das Gleitstück (6) außerdem mit einer kegelstumpfartigen Bohrung (14) versehen ist, welche zur Festlegung des Kolbens (2) in seiner Lage mit einer Zapfenschraube (15) zusammenwirkt.

3. Bohrkopf nach Anspruch 1, dadurch gekennzeichnet, daß die Stellschraube (12) und das Gleitstück (6) jeweils mit einer zentrischen Bohrung (12' bzw. 6') versehen sind, wobei die Bohrung (6') des Gleitstückes (6) auf der dem Kolben (2) zugewandten Seite in einer Plansenkung (6'') mündet, welche mit einer in der Halterung des Werkzeugs (3) mündenden Bohrung (16) im Kolben (2) zusammenwirkt.

4. Bohrkopf nach Anspruch 1, dadurch gekennzeichnet, daß die Ausgleichsvorrichtung (7) mit voneinander unabhängigen Ausgleichsgewichten (8 und 9) außerdem aus Ringen (17 und 18) besteht, welche über sowohl besagte Ringe (17 und 18) als auch die Ausgleichsgewichte (8 und 9) nach deren Einstellung in ihrer Lage festspannenden Schrauben (19 und 20) mit den Ausgleichsgewichten (8 und 9) fest verbunden sind, wobei die Ausgleichsgewichte (8 und 9) vorzugsweise von in einer Nut (24) des Körpers (1) geführten ringförmigen Segmenten mit rechtekkigem Querschnitt gebildet werden.

5. Bohrkopf nach Anspruch 4, dadurch gekennzeichnet, daß die Ringe (17 und 18) vorzugsweise mit Teilstrichen (21 und 22) versehen sind, welche mit einer am Körper (1) vorgesehenen festen Markierung (23) zusammenwirken.
